# EUROPEAN PATENT APPLICATION

(11) **EP 4 723 405 A1**
(43) Date of publication of application: **08.04.2026**
(21) Application number: 24204257.0
(22) Date of filing: 02.10.2024
(51) Int. Cl.: H02G 3/32, F16L 3/22

(54) **FASTENING FLEXIBLE LONGITUDINAL COMPONENTS TO A SUPPORT STRUCTURE OF A MEDICAL EQUIPMENT**

(71) Applicant: Koninklijke Philips N.V., 5656 AG Eindhoven (NL)
(72) Inventor: FRIMAN, Olli Tapio, Eindhoven (NL); VAN DELFT, Huub, Eindhoven (NL); VENHUIZEN, Johan, 5656AG Eindhoven (NL); VAN DOORN, Andre, Eindhoven (NL)
(74) Representative: Philips Intellectual Property & Standards

(57) **Abstract**

The present invention relates to attaching or mounting cables or other flexible linear structures to a medical equipment. In order to provide a facilitated fastening, a holding device (10) of a fastening system for fastening flexible longitudinal components is provided. The holding device comprises a band segment (12) and a connection head (14). The band segment is connected to the connection head and is configured to be wrapped around the flexible longitudinal component. The connection head is configured to be inserted into a matching recess provided by a fixation base to fasten the flexible longitudinal component to the support structure. Further, a fixation base (50) of the fastening system is provided that comprises at least one body structure (52) with at least one holding side (54) configured for an attachment of at least one holding device for fastening flexible longitudinal components to the fixation base, and with at least one connection interface (56) configured to mount the body structure to a support structure. The holding side comprises at least one recess (58) that is configured for an insertion of a matching connection head of the holding device.

## Description

### FIELD OF THE INVENTION

The present invention relates to attaching or mounting cables or other flexible linear structures to medical equipment. The present invention relates in particular to a holding device of a fastening system for fastening flexible longitudinal components to a support structure of a medical equipment, to a fixation base of a fastening system for fastening flexible longitudinal components to a support structure of a medical equipment, to a fastening system for fastening flexible longitudinal components to a support structure of a medical equipment, to a medical equipment and to method for fastening flexible longitudinal components to a support structure of a medical equipment.

### BACKGROUND OF THE INVENTION

Cables or other supply lines are used in devices and structures in a medical intervention room like imaging systems, subject support, monitors, movable supports and the like. Cables can be used for energy supply or for data and signal transmission purposes. Different ways exist to conduct cables inside structures. Cables can be guided in conduits like tubes; cables can also be provided as a cable harness with individual cables prefabricated to the desired types and lengths and attached to each other. However, it has been shown that cables in conduits require additional space and a cable harness is complex and cumbersome to manufacture and thus not really suitable for non-mass market products like highly developed CT imaging arrangements with customizing options.

### SUMMARY OF THE INVENTION

There may thus be a need to provide a facilitated fastening of cables or other flexible longitudinal components in medical equipment.

The object of the present invention is solved by the subject-matter of the independent claims; further embodiments are incorporated in the dependent claims. It should be noted that the following described aspects of the invention apply also for the holding device of a fastening system for fastening flexible longitudinal components to a support structure of a medical equipment, for the fixation base of the fastening system, for the fastening system, for the medical equipment and for the method for fastening flexible longitudinal components to a support structure of a medical equipment.

According to the present invention, a holding device of a fastening system for fastening flexible longitudinal components to a support structure of a medical equipment is provided. The holding device comprises a band segment and a connection head. The band segment is connected to the connection head and is configured to be wrapped around the flexible longitudinal component. The connection head is configured to be inserted into a matching recess provided by a fixation base to fasten the flexible longitudinal component to the support structure.

It is noted that when it is referred to cables, also other structures like tubes, conduits, wires etc. are referred to.

As an effect, organizing cables in tight space and setting accurate lengths for the cables in the bundle is facilitated. As an example, length requirements may relate to cable sections exposed to dynamic twist and bend. Control of the cable lengths and specific order are even accomplished at final assembly and installation with multiple different size cables and hoses due to the present solution of the cable holding arrangement.

As an option, lengths and fixation locations of cables can be measured and 'locked' during the cable set manufacturing while the cables are straightened, and measurements are facilitated. According to an aspect, simple tools can be applied while ensuring correct distances.

As an advantage, this provides a simplified way for supporting cables that are conducted through a structure like an operation room or an equipment used in such operation room. The cable holdings are keeping the cables fixated in correct order, which will also help repeatability of the machinery. As an effect, this improves reliability in flexible joints and their electromagnetic behavior. Unlike in a prefabricated cable harness, a hold and support is achievable for each cable (or cable bundle having the handling of a cable) separately. It is provided a simple and effective way of applying features to each cable separately in such way that it will be easy to install them in correct lengths and order during the installation/assembly. This also provides benefits related to cable manufacturing and service activities.

According to an example, the band segment is length-adjustably connected to the head. This allows to attach the holding device to cables with different cable diameter.

According to an example, the band segment is configured to be wrapped around the flexible longitudinal component in a non-releasable manner. As an option, the band segment is attached to the connection head with a fixed length.

However, a de-installation and also re-installation is still possible due to the specific connection with a fixation base plate (see below).

According to the present invention, also a fixation base of a fastening system for fastening flexible longitudinal components to a support structure of a medical equipment is provided. The fixation base comprises at least one body structure with at least one holding side configured for an attachment of at least one holding device for fastening flexible longitudinal components to the fixation base, and with at least one connection interface configured to mount the body structure to a support structure. The holding side comprises at least one recess that is configured for an insertion of a matching connection head of the holding device.

According to an example, the at least one recess is configured for the insertion of the connection head in an inserting direction. The at least one recess provides a holding force to an inserted connection head against removing the connection head by at least one of the group comprising: friction forces, lateral elastic clamping forces, chemical adhesion and magnetic forces. At least one of the side walls of the head or at least one recess is having an inclination such that a width of the recess increases in the insertion direction and the recess provides a snapping-in recess for the respective connection head.

According to an example, a plurality of recesses is provided. A first part of the recesses is provided as first type recesses for receiving and holding first type connection heads. A second part of the recesses is provided as at least second type recesses for receiving and holding second connection heads. The first type recesses are different than the second type recesses and differ in at least one of the group comprising different forms, different sizes, different proportions and different orientation. The different types of recesses provide a predefined fastening order for the flexible longitudinal components equipped with matching connection head types.

According to an example, the holding side has i) at least two or more recesses along a direction for placement of a flexible longitudinal component, the recesses forming a pattern for a matching pattern of a respective number of connection heads of holding devices along a flexible longitudinal component. In addition or alternatively, the holding side has ii) longitudinal grooves for a predefined placement of the flexible longitudinal components.

According to an example, two or more body structures are provided. The two or more body structures are configured to be arranged in a stapled manner for mounting to the support structure.

According to the present invention, also a fastening system for fastening flexible longitudinal components to a support structure of a medical equipment is provided. The system comprises at least one holding device according to one of the preceding examples and at least one fixation base according to one of the preceding examples. The connection heads are insertable into one of the recesses in a such a way that they are capable of holding a flexible longitudinal component.

According to an example, the holding devices are provided as cable straps with a flexible tape section as the band segment and a head with a pawl. The recesses in the fixation base are adapted to the heads of the cable.

In an option, provided in addition or alternatively, a cover is provided that is mountable to the body structure to hold fastened cables in a locked manner.

According to the present invention, also a medical equipment is provided. The medical equipment comprises a plurality of components, a support structure and a plurality of flexible longitudinal components fastened to the support structure. At least a part of the flexible longitudinal components is fastened to the support structure by a holding fixture configured as a fastening system according to the preceding examples.

According to an example, the flexible longitudinal components are provided as cables.

According to an example, a fixation base of the fastening system is provided in an integrated manner by the support structure.

According to the present invention, also a method for fastening flexible longitudinal components to a support structure of a medical equipment is provided. The method comprising the following steps:
- Providing at least one flexible longitudinal component;
- Attaching at least one holding device according to one of the examples above to the flexible longitudinal component;
- Providing a fixation base according to one of the examples above;
- Inserting at least one of the at least one connection heads into one of the recesses of the fixation base; and
- Mounting the fixation base to the support structure.

According to an aspect, a cable fastening is provided by a tie wrap and a plate with recesses or cavities. The tie wrap provides a holding device, and the plate provides a fixation base. Both form a fastening and organizing system.

These and other aspects of the present invention will become apparent from and be elucidated with reference to the embodiments described hereinafter.

### BRIEF DESCRIPTION OF THE DRAWINGS

Exemplary embodiments of the invention will be described in the following with reference to the following drawings:
Fig. 1a schematically shows an example of a holding device of a fastening system for fastening flexible longitudinal components to a support structure of a medical equipment.
Fig. 1b schematically shows an example of a fixation base of the fastening system for fastening flexible longitudinal components to a support structure of a medical equipment.
Fig. 2 shows an example of the fastening system with a holding device of Fig. 1a and a fixation base of Fig. 1b.
Fig. 3 shows an example of a holding device attached to a cable, as an example for a flexible longitudinal component.
Fig. 4 shows a plurality of cables fastened to a support structure by an example of a fastening system comprising three body structures.
Fig. 5a shows an example of a fixation base from a first side.
Fig. 5b shows the fixation base of Fig. 5a from an opposite second side.
Fig. 6 shows another example of a fastening system with one cable fastened to a fixation base with a holding device.
Fig. 7 shows another example of a fastening system with several cables fastened to a fixation base from one side and with further several cables fastened to the fixation base from the other side with a plurality of holding devices.
Fig. 8a shows a first plurality of cables attached to a fixation base from a first side, and a second plurality of cables attached to the fixation base from a second side.
Fig. 8b shows the first and second plurality of cables without the fixation base.
Fig. 9 shows an X-ray imaging setup with a C-arm X-ray imaging system, a subject support and further appliances as an example of a medical equipment.
Fig. 10 shows basic steps of an example of a method for fastening flexible longitudinal components to a support structure of a medical equipment.

### DETAILED DESCRIPTION OF EMBODIMENTS

Certain embodiments will now be described in greater details with reference to the accompanying drawings. In the following description, like drawing reference numerals are used for like elements, even in different drawings. The matters defined in the description, such as detailed construction and elements, are provided to assist in a comprehensive understanding of the exemplary embodiments. Also, well-known functions or constructions are not described in detail since they would obscure the embodiments with unnecessary detail. Moreover, expressions such as "at least one of', when preceding a list of elements, modify the entire list of elements and do not modify the individual elements of the list.

The present invention relates to attaching or mounting cables or other flexible linear structures to a medical equipment. In order to provide a facilitated fastening, in an option, a holding device of a fastening system for fastening flexible longitudinal components is provided. The holding device comprises a band segment and a connection head. The band segment is connected to the connection head and is configured to be wrapped around the flexible longitudinal component. The connection head is configured to be inserted into a matching recess provided by a fixation base to fasten the flexible longitudinal component to the support structure. Further, a fixation base of the fastening system is provided that comprises at least one body structure with at least one holding side configured for an attachment of at least one holding device for fastening flexible longitudinal components to the fixation base, and with at least one connection interface configured to mount the body structure to a support structure. The holding side comprises at least one recess that is configured for an insertion of a matching connection head of the holding device.

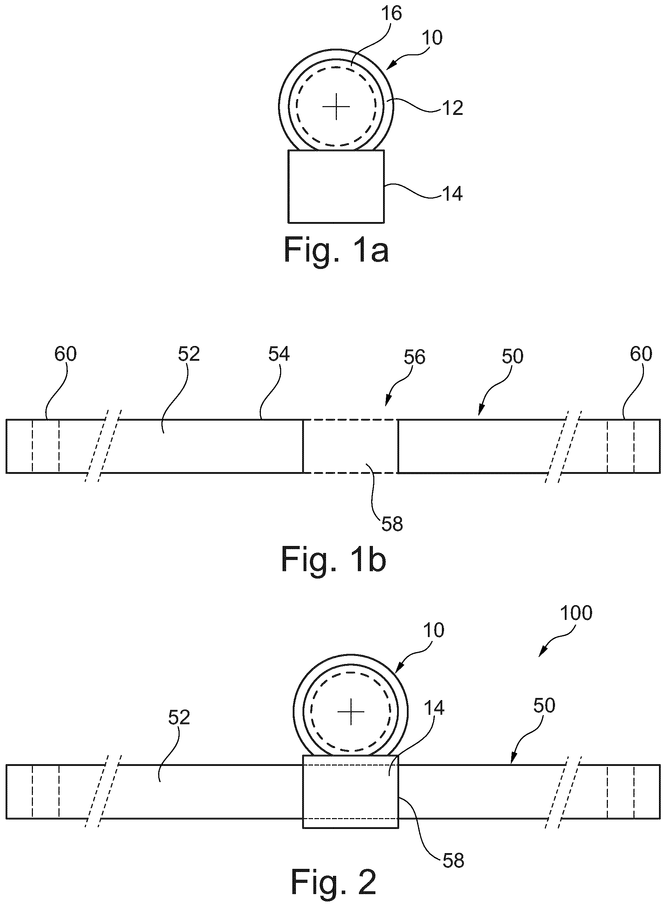

Fig. 1a schematically shows an example of a holding device 10 of a fastening system for fastening flexible longitudinal components to a support structure of a medical equipment. The holding device 10 comprises a band segment 12 and a connection head 14. The band segment 12 is connected to the connection head 14 and is configured to be wrapped around a flexible longitudinal component 16, indicated with broken lines. The connection head 14 is configured to be inserted into a matching recess (see Fig. 1b, and also Fig. 2) provided by a fixation base to fasten the flexible longitudinal component to the support structure.

In an option, the holding device 10 of the fastening system is provided for fastening flexible longitudinal components to a support structure of another kind of equipment.

The term "holding device" relates to a device for holding, i.e. fastening the flexible longitudinal components to a base, e.g. to hold them in place.

The term "band segment" relates to a part that is having a longitudinal extension to extend around the flexible longitudinal component. In an option, the band segment 12 is shaped like a sleeve, i.e. also extending along the flexible longitudinal component for some extent. The core aspect is to hold the flexible longitudinal component.

The term "connection head" relates to a part that is suitable for insertion into a recess. The connection head 14 can have a lateral extension like a head of a nail or screw with a neck connecting the connection head to the band segment 12, but the connection head 14 can also be provided as a bolt form or stud, without a neck.

The term "flexible longitudinal component" relates to a longitudinal component like a cable, wire, duct, line, tube or the like, which longitudinal component needs to be fastened to a support structure, e.g. for holding the flexible longitudinal component in place of for supporting the flexible longitudinal component.

The holding device 10 relates to a part that is wrapped around the flexible longitudinal component, i.e. mounted into the flexible longitudinal component. The holding device 10 can then be attached to the fixation base (see below).

The holding device 10 can also be referred to as fastening device, fixation device, attachment device or retaining device.

The flexible longitudinal component comprises at least one of the group of a cable, a wire, a conduit and a tube.

In a first option, the holding device 10 is configured to wrap the band segment 12 around individual cables.

In a second option, the holding device 10 is configured to wrap the band segment 12 around two or more cables, e.g. bundle of cables, that should stay together even when not fastened.

Fig. 1b schematically shows an example of a fixation base 50 of a fastening system for fastening flexible longitudinal components to a support structure of a medical equipment. The fixation base 50 comprises at least one body structure 52 with at least one holding side 54 configured for an attachment of at least one holding device for fastening flexible longitudinal components to the fixation base. The fixation base 50 also comprises at least one connection interface 56 configured to mount the body structure 52 to a support structure. The holding side 54 comprises at least one recess 58 that is configured for an insertion of a matching connection head of the holding device.

In an option, the body structure and the support are different parts. In another option, the body structure and the support are provided as one part, e.g. provided in an integrated manner.

The term "fixation base" relates to a part that is mountable to the support structure of the medical equipment. The flexible longitudinal component can then be fastened to the fixation base 50 via the holding device 10.

The fixation base 50 can also be referred to as fastening base, holding base, attachment base or retaining base.

The term "body structure" relates to a sort of base structure. The body structure 52 can be provided as a plate-like component or flat grid providing the recesses over a fixation surface for fastening the flexible longitudinal components.

The term "holding side" relates to at least one side of the body structure 52 onto which flexible longitudinal components can be fastened in a structured side-by-side manner.

The term "connection interface" relates to a part or portion that is configured for the connection to the support structure. The connection interface 56 can be a matching profile for form-fitting connection with a respective adapter on the support structure or even just a simple through hole for mounting a screw.

The term "recess" relates to a hole or cavity or slot provided for inserting the connection head. The recess 58 can be a through hole or a blind hole.

In an example, the connection interface is configured to mount the body structure directly to the support structure; in another example, the connection interface is configured to mount the body structure indirectly to the support structure, e.g. via another component.

In an option, the body structure comprises two holding sides configured for an attachment of at least one holding device for fastening flexible longitudinal components to the fixation base.

As an option, the body structure 52 comprises one or several secondary attachment openings or through-holes 60 for attaching the fixation base 50 to a (not shown) support structure of a medical equipment. For examples, bolts or screws can be used to attach the fixation base 50.

Fig. 2 shows an example of a fastening system 100 for fastening flexible longitudinal components to a support structure of a medical equipment. The fastening system 50 comprises at least one example of the holding device 10 according to one of the examples above or below, and at least one example of the fixation base 50 according to one of the examples above or below. The connection heads 14 are insertable into one of the recesses 58 in a such a way that they are capable of holding a flexible longitudinal component.

In Fig. 2, the connection head 14 is inserted into the recess 58, thereby fastening the flexible longitudinal component 16, e.g. a cable, to the (not shown) support structure of a medical equipment.

The fastening system 50 relates to a combination of at least one fixation base 50 and a plurality of holding devices 10. Flexible longitudinal components can then be fastened to a support structure by the fastening system.

The fastening system can also be referred to as holding system, fixation base, attachment base or retaining base.

The fastening system 100 with the holding device 10 and the fixation base 50 can also be referred to as a fastening system with a fastening device and a fastening base or as a holding system with a holding device and a holding base or as a fixation system with a fixation device and a fixation base or as an attachment system with an attachment device and an attachment base or as a retaining system with a retaining device and a retaining base.

In an option, the connection head 14 is configured to be releasably inserted into the matching recess 58 to releasably attach the holding device 10 to the fixation base 50.

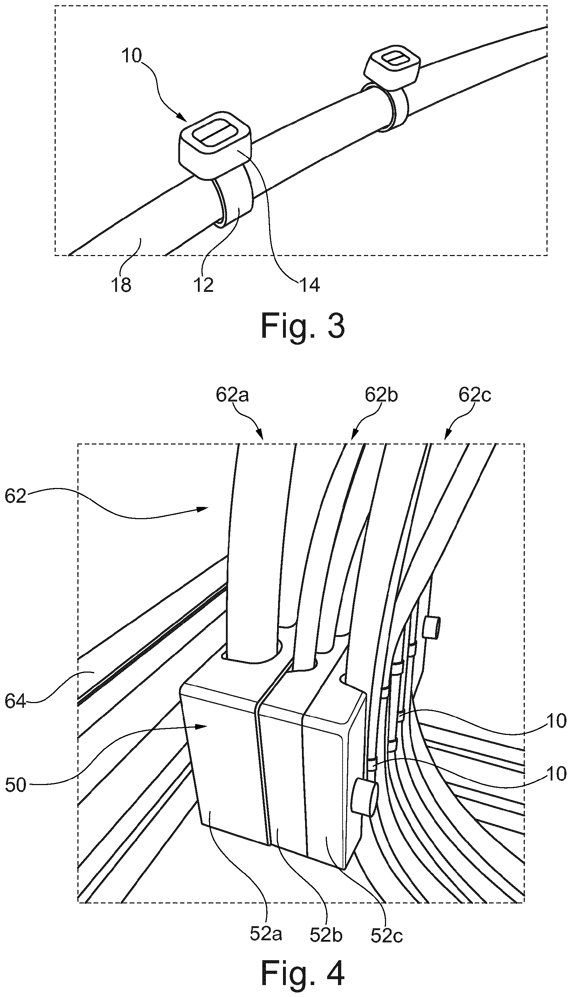

Fig. 3 shows an example of the holding device 10 attached to a cable 18 as an example for a flexible longitudinal component. The band segment 12 is wrapped around the cable 18. The connection head 14 is shown oriented upwards for illustration purposes.

In Fig. 3, two of the holding devices 10 are attached to the cable 18.

In an example of the holding device, the band segment 12 is length-adjustably connected to the connection head 14.

The term "length-adjustable" relates to being capable of being adapted to different sizes of diameters of the flexible longitudinal component.

In an example of the holding device 10, the band segment 12 is configured to be wrapped around the flexible longitudinal component in a non-releasable manner. As an option, the band segment 12 is attached to the connection head 14 with a fixed length.

The term "non-releasable" relates to a fixation of the band segment 12 that cannot be loosened without destroying the band segment 12.

In an option, the band segment 12 is configured to be wrapped around the flexible longitudinal component in a releasable manner.

The term "fixed length" relates to a defined length without the option to adjust the length.

The band segment 12 is configured to be fixedly wrapped around the flexible longitudinal component.

In an option, a plurality of the holding devices 10 is provided. Several types are provided with different lengths of the band segment 12 to match with different diameter sizes of the flexible longitudinal components.

The connection head 14 of the holding device 10 is configured to be releasably inserted into the matching recess 58 of the fixation base 50 to releasably fasten the flexible longitudinal component to the support structure.

In an option, a plurality of the holding devices 10 is provided. A first part of the holding devices 10 is provided with first type connection heads 14 and a second part of the holding devices 10 is provided with at least second type connection heads 14. The first type connection heads 14 are configured to be inserted in first type of the recesses 58 and the second type connection heads 14 are configured to be inserted in second type of the recesses 58. The first type connection heads 14 are different than the second type connection heads 14 such that an insertion in the respective other type of the recess 58 is prevented. In an option, two different connections prevent unwanted orientations. In another option, the connections are not provided differently. The first type connection heads 14 are different than the second type connection heads 14, and differ in at least one of the group comprising different forms, different sizes, different proportions and different orientation with respect to the band segment.

In an example, more than two different connection head types 14 are provided with respective matching recesses 58.

The different types provide a differentiation, for example for different cable types. Besides a coding, also a certain order can be predetermined by arranging respectively sorted recesses.

In one variation, the different connection head types are combined with respectively different band segments 12 having at least one of the group of different thicknesses, different widths and different lateral edge contours.

In an option, a plurality of the holding devices 10 is provided. A first part of the holding devices is provided with first type band segments and a second part of the holding devices is provided with at least second type band segments. The first type band segments are different than the second type band segments and differ in at least one of the group comprising different thicknesses, different widths and different lateral edge contours.

The different band segment types, as well as the different distances between band segments, can also be used for coding.

The differences can also be combined with different colors allowing additional identification and coding.

As an option, cables, ducts, pipes, tubes and the like can be equipped with holding devices with certain types of connection heads for identification and coding purposes.

According to an aspect, the holding device 10 is attached to a flexible longitudinal component like a cable, pipe or tube, but the holding device itself does not connect anything to anything. Only upon insertion of the connection head 14 into a matching recess 58, a fastening function is provided.

The connection via the connection head 14 of the holding device 10 allows to reuse the fastening, i.e. it is possible to remove the connection head 14 from the recess 58, e.g. to temporarily remove a cable, and to re-insert the connection 14 head into the recess 58 to fasten the cable again.

As shown in Fig. 3, the connection head 14 is having a rectangular shape.

In a matching example of the fixation base 50, the recess 58 is having a rectangular cross section.

The term "rectangular" relates to a form that has a general form of a rectangle, but the corners may be rounded or chamfered or beveled.

In another option, the recess 58 is having a square cross-section.

In a further, the recess 58 is having a rounded cross-section.

In a still further, the recess 58 is having a circular cross-section.

In an example of the fixation base 50, the at least one recess 58 is configured for the insertion of the connection head 14 in an inserting direction. The at least one recess 58 provides a holding force to an inserted connection head 14 against removing the connection head 14 by at least one of the group comprising: friction forces, lateral elastic clamping forces, chemical adhesion and magnetic forces.

In an option, at least one of the side walls of the connection head 14 or of the at least one recess 58 is having an inclination such that a width of the recess 58 increases in the insertion direction and the recess 58 provides a snapping-in recess for the respective connection head 14.

In another option, at least one of the side walls of the connection head 14 or at least one recess 58 is having an inclination such that a width of the recess 58 decreases in the insertion direction.

The term "holding force" relates to a force acting on the connection head 14 and thus the holding device 10 that holds the flexible longitudinal component in place. The holding force has to be overcome when releasing the holding device 10 from the fixation base 50.

In an option, the snapping-in of the connection head 14 provides a tightening of the band segment 12 around the flexible longitudinal component.

This provides an increased hold of the connection head 14 with a biasing direction towards the holding function due to the inclination.

In another variation, the recess 58 is having parallel side walls with a constant width, but the to be inserted connection head 14 is having an enlarged distal tip that reaches through the recess 58 and thus provides an increased holding force.

In an option, the recesses 58 provide a friction force when inserting the connection head 14, and when removing the connection head 14.

In a variation, the friction when removing is larger than the friction when inserting the connection head 14. For achieving this, as an example, the walls of the recess 58 can be provided with a surface structure in combination with a surface structure of the connection head that provides more mechanical interaction in one movement direction than in the other direction, like sawtooth profile sections.

Fig. 4 shows a plurality of cables 62 fastened to a support structure 64 by an example of the fastening system 50 comprising three of the body structures 52, indicated with reference numerals 52a, 52b and 52c.

A first plurality 62a of the cables is fastened to the first body structure 52a by a respective number of the holding devices 10. The first body structure 52a is mounted to the support structure 64 with the respective holding side facing the support structure 64.

A second plurality 62b of the cables is fastened to the second body structure 52b by a respective number of the holding devices 10. The second body structure 52b is mounted to the support structure 64 via the first body structure 52a with the respective holding side of the second body structure 52b facing the first body structure 52a.

A third plurality 62a of the cables is fastened to the third body structure 52a by a respective number of the holding devices 10. The third body structure 52c is mounted to the support structure 64 via the second body structure 52b with the respective holding side of the third body structure 52c facing the second body structure 52b.

In an option, two adjacent body structures are mounted with their holding sides facing each other.

In another option, two adjacent body structures are mounted with their holding sides facing away from each other.

In an example of the fixation base 50, see e.g. Fig. 4, two or more of the body structures 52 are provided. The two or more body structures 52 are configured to be arranged in a stapled manner for mounting to the support structure.

The term "stapled" relates to arranging the body structures 52, which can be plate-shaped, onto each other, facing with their holding sides 54 in the same or in opposite directions.

As an effect, several layers of sorted cables or tubes can be fastened.

As an option, the flexible longitudinal components can be fastened to the designated body structures 52 which can then be assembled, i.e. mounted to the support structure.

In an example, a first of the two or more body structures 52 is mounted to the support structure and the furthermore body structures 52 are mounted to the first body structure 52.

In a first option, the first body structure 52 is mounted to the support structure, and the further body structures 52 are mounted to the first body structure 52. For example, a screw connection is provided for fixing the first body structure 52 to the support structure; further screw connections are provided for fixing the further body structures 52 to the first body structure 52.

In a second option, the first body structure 52 is mounted to the support structure, and the further body structures 52 are also mounted to the support structure. For example, a screw connection is provided running through all body structures 52.

In a first example, the body structure 52 is configured to be mounted to the support structure facing with the holding side 54.

In a second example, the body structure 52 is configured to be mounted to the support structure facing with an opposite side of the holding side 54.

When having two or more of the body structures 52:
- In a first option, two body structures 52 are configured to be mounted such that they are facing each other with their holding sides, mirrored in a first way. i.e. mirrored orientation in a first way.
- In a second option, two body structures 52 are configured to be mounted such that they are facing each other with an opposite side of their holding sides, i.e. mirrored orientation in a second way.
- In a third option, two body structures 52 are configured to be mounted such that they are facing in the same direction with their holding sides, i.e. parallel orientation to each other.
- In a further option, a combination of one or more parallel orientations and one or more mirrored orientations is provided.

In an option, a fastening system is provided that comprises a fixation base with several of the body structures, and a plurality of the holding devices.

In another option, a fastening system is provided that comprises several of the fixation bases and a plurality of the holding devices.

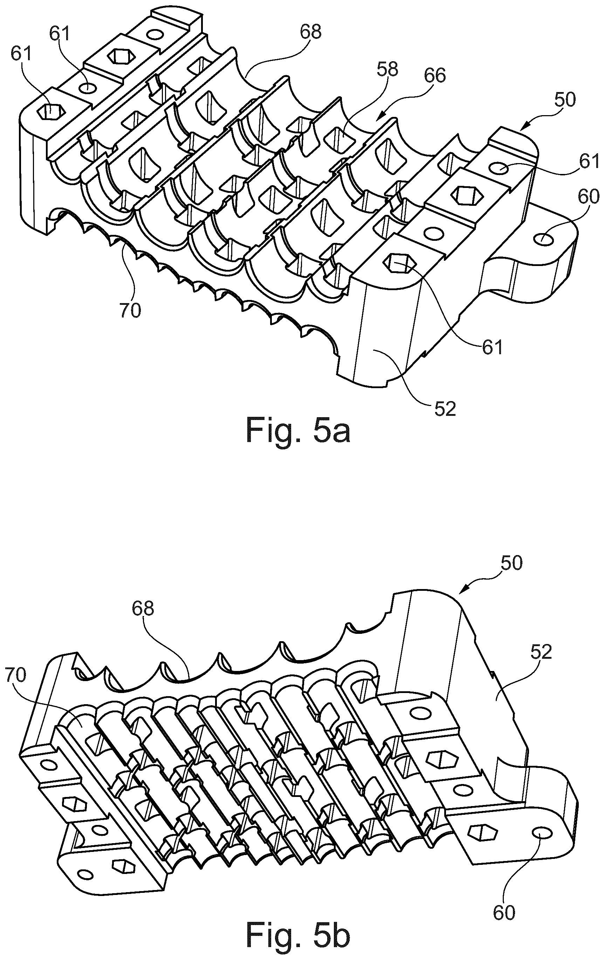

Fig. 5a shows an example of the fixation base 50 from a first side. Fig. 5b shows the fixation base 50 of Fig. 5a from an opposite second side.

In an example of the fixation base 50, a plurality 66 of the recesses 58 is provided.

As an option, a first part of the recesses 58 is provided as first type recesses for receiving and holding first type connection heads 14. A second part of the recesses 58 is provided as at least second type recesses for receiving and holding second connection heads 14. The first type recesses 58 are different than the second type recesses 58 and differ in at least one of the group comprising different forms, different sizes, different proportions and different orientation. The different types of recesses 58 provide a predefined fastening order for the flexible longitudinal components equipped with matching connection head types.

As an option, the fixation base 50 comprises first type recesses 58 on one side for one type of cables or the like. The fixation base 50 also comprises second type recesses 58 on the other side for another type of cables or the like.

As an example, Fig. 5a and Fig. 5b show a receiving profile 68 for larger diameter cables on the upper side, whereas a receiving profile 70 for smaller diameter cables is shown on the lower side.

In an option, receiving profiles for different diameter cables are provided on the same side.

As an option, the fixation base is provided with lateral extensions having the through-holes 60 for mounting purposes. Further through-holes 61 can be provided to attach further fixation plates, as in Fig. 4.

In an option, the second type recesses 58 are not provided, e.g. when orientation coding is not required; connections heads 14 and recesses can be equal.

The term "types" relates to different kind of recesses 58.

In an option, more than two, e.g. three, four, five or more, types of recesses 58 are provided for a respective number of matching different connection heady types.

In an example of the fixation base 50, in a first option, the holding side has i) at least two or more recesses 58 along a direction for placement of a flexible longitudinal component, the recesses 58 forming a pattern for a matching pattern of a respective number of connection heads 14 of holding devices 10 along flexible longitudinal component. In another example of the fixation base 50, in a second option, the holding side has ii) longitudinal grooves for a predefined placement of the flexible longitudinal components.

The term "direction for placement" relates to the longitudinal direction of the flexible longitudinal component when the flexible longitudinal component is fastened.

The term "pattern" relates to a certain number and intervals, i.e. distances of the recesses or the connection heads.

The grooves can have different sizes, e.g. different radii and/or different depths.

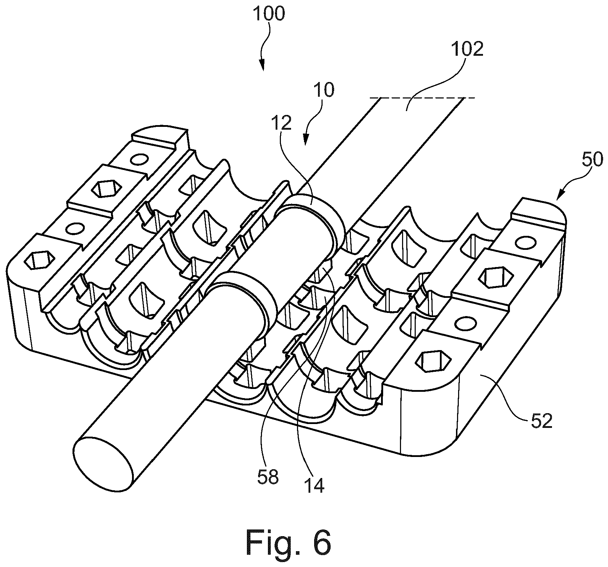

In an example of the fastening system 100, the holding devices 10 are provided as cable straps (e.g. see Fig. 6) with a flexible tape section as the band segment 12 and a connection head 14 with a pawl. The recesses 58 in the fixation base 50 are adapted to the connection heads 14 of the cable.

The pawl in the connection head 14 provides a sort of a ratchet that allows to pull the free end of the tape section 12 such that the tape section 12 tightens, and due to the pawl does not come loose again.

The cable strap can also be referred to as tie wrap, cable tie, hose tie, wire tie, zap-strap or zip tie.

Fig. 6 shows another example of the fastening system 100 with one cable 102 to be fastened to the fixation base 50 with the holding device 10. The band segment 12 is wrapped around the cable 102. The connection head 14 is shown above the respective recess 58 of the fixation base 50, not yet inserted. The fixation base 50 is provided for receiving multiple cables on one side.

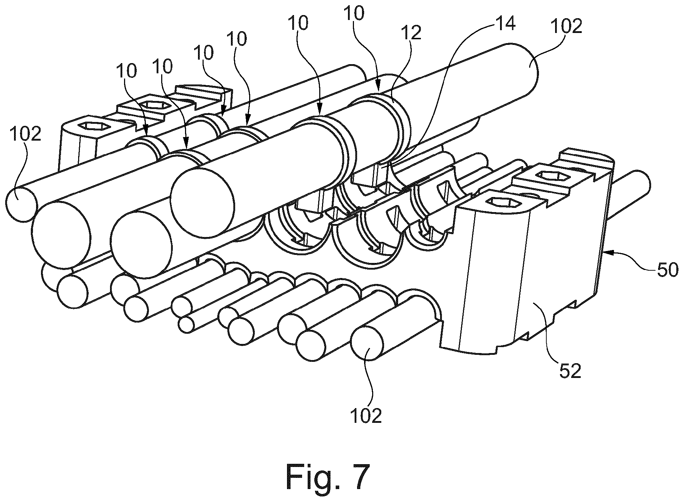

Fig. 7 shows another example of the fastening system 100 with several cables 102 fastened to the fixation base 50 from one side and with further several cables 102 fastened to the fixation base 50 from the other side with a plurality of the holding devices 10.

Cables with different diameters can be arranged on each side of the fixation base 50.

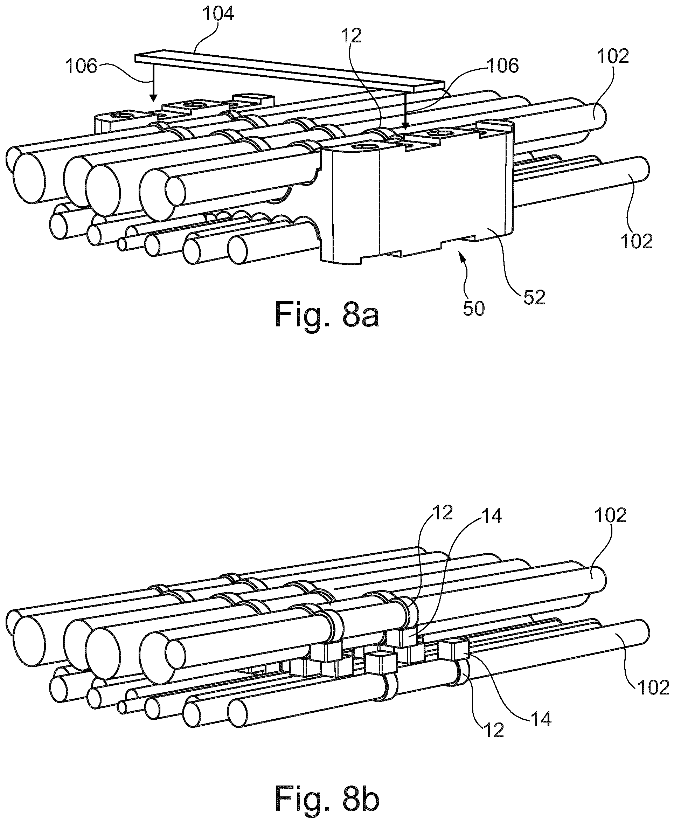

Fig. 8a shows a first plurality of the cables 102 attached to the fixation base 50 from a first side and a second plurality of cables attached to the fixation base 50 from a second side.

As an option, a cover 104 is provided to fixedly secure the connection heads 14 in the recesses 58. In Fig. 8a, the cover is shown above the cables in a not-yet mounted state. Two arrows 106 indicate the placement on top of, or at least above the cables such that the connection heads 14 cannot be moved out of the recesses 58. The cover 104 is mountable to the body structure 52 to hold fastened cables 102 in a locked manner. Thus, the cables are securely fastened in a releasable manner. The cover 104 is illustrated in a simplified manner. In an example, it is provided with a flat abutting side. In another example, it is provided with a contoured abutting side to match with the contours of the cable.

In an option, the cover 104 has the purpose of preventing the cables to move such that the connection head is getting released from the recess. The cover 104 is not actually clamping or pressing the cables to hold them in longitudinal direction. This hold is provided by the holding devices 10.

For example, the cover 104 is fixed by screws or the like, or by a clipping mechanism.

It is noted that the cover 102 is also provided as an option for the further variations.

Fig. 8b shows the first and second plurality of cables without the fixation base 50.

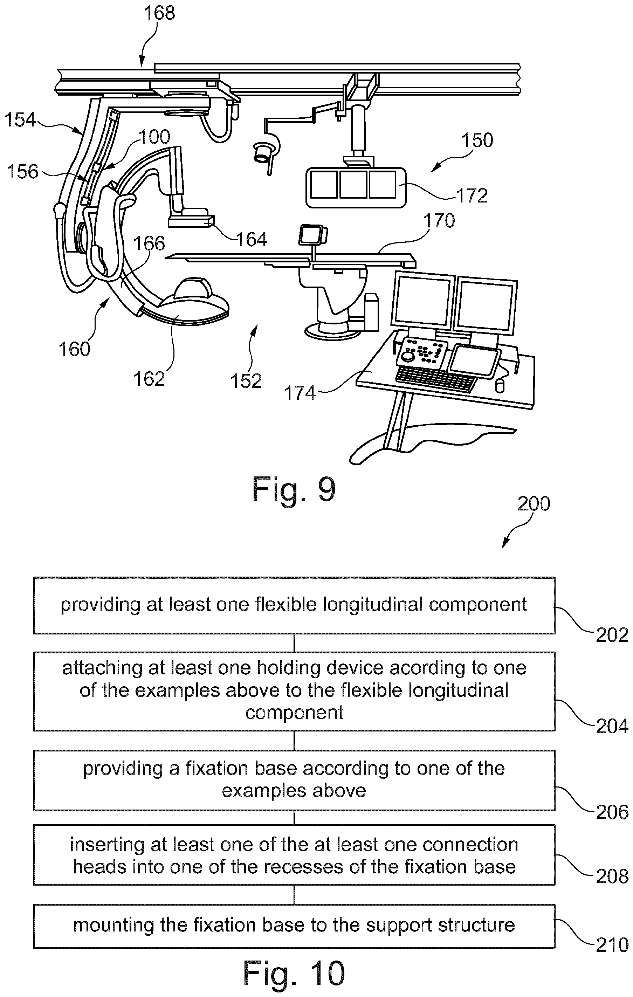

Fig. 9 shows an example of a medical equipment 150. The medical equipment 150 comprises a plurality of components 152, a support structure 154 and a plurality of flexible longitudinal components 156 fastened to the support structure 154. At least a part of the flexible longitudinal components 156 is fastened to the support structure 154 by a holding fixture configured as an example of the fastening system 100 according to the examples above.

The term "medical equipment" relates to any kind of device, system or arrangement used in a medical environment like in an operation room.

The term "components" relates to parts implemented and combined forming the equipment. For example, components can be electric motors and drives, receivers and radiation generating devices, cameras or sensors.

The term "support structure" relates to structural parts forming the load transfer, stability and mechanical connection of the parts and components.

The term "flexible longitudinal component" relates to cables, wires, ducts, conduits, tubes and the like.

As an example for the medical equipment 150, Fig. 9 shows an X-ray imaging setup with a C-arm X-ray imaging system 160 having an X-ray source 162 and an X-ray detector 164 mounted to a movably supported C-arm 166. As an example, a movable ceiling mounted rail support 168 is provided for the C-arm 166. Further, a subject support 170 is provided for receiving a subject. Further appliances like a display arrangement 172 or a console 174 for operating the various devices and systems can be provided.

In an example of the medical equipment 150, the flexible longitudinal components 156 are provided as cables.

In another example, in addition or alternatively, the flexible longitudinal components are provided as tubes.

In an example of the medical equipment 150, an example of the fixation base 50 of the fastening system 100 is provided in an integrated manner by the support structure 154 (not shown in detail).

In other words, the support structure acts as the body structure and the recesses are provided by the support structure.

The term "integrated manner" relates to the fixation base structure being formed by the support structure, e.g. instead of a separate plate, the recesses are already provided by, i.e. within the support structure.

Fig. 10 shows basic steps of an example of a method 200 for fastening flexible longitudinal components to a support structure of a medical equipment. The method comprises the following steps:
- In a first step 202, at least one flexible longitudinal component is provided.
- In a second step 204, at least one holding device according to one of the examples above is attached to the flexible longitudinal component.
- In a third step 206, a fixation base according to one of the examples above is provided.
- In a fourth step 208, at least one of the at least one connection heads is inserted into one of the recesses of the fixation base.
- In a fifth step 210, the fixation base is mounted to the support structure.

In an option, the fixation base is provided first, and the flexible longitudinal component/s is/are fastened to the fixation base. Then, the fixation base is mounted to the support structure.

In another option, the fixation base is first mounted to the support structure. Then, the flexible longitudinal component/s is/are fastened to the fixation base.

The present solution provides the advantage that cables can be held in place with a certainty of the applied holding force on each cable. Instead of trying to press fit each cable between e.g. locking blocks, each cable is engaged by a form closed feature. Each cable hold is independent of tolerance of the cable diameter. Even though the cable outer diameter may be inaccurate, the cable is steadily hold. When arranging e.g. a cable wrap in a tightened manner around the bare individual cable, hold against rotation and pull is controlled better compared to fixing a cable to a support with a cable wrap.

Since connection points on the cable can be accurately measured and locked already at the cable bundle manufacturer, cable length tolerance control between critical attachment locations can vary during assembly and installation due to providing improved fastening.

In an option, cable order between critical attachment locations is achieved and maintained. Even poke-yoke features or mechanical coding can be implemented to help maintaining the cable order. The distances can be varied to identify specific cables.

Instead of putting cable wraps on the cables during the assembly/installation, they can be installed while the cables are `on the table' during the bundle build (cable sub assembly). Length measurements are also easier and more accurate at cable supplier. Cables can be easily removed temporarily from the holder block during the service or assembly without cutting the tie-wraps or losing the length and order references. This is in particular helpful when installing cables in limited spaces can be challenging during the assembly/service.

In an option, the holding device are installed at the cable bundle manufacturer. Also, the holding device locations can be marked on the cables in case of holding device installation at the factory, installation or by service.

The fixation base can also be referred to as locking block. The fixation base is designed for the desired cable bundle. Due the use of simple holding devices as fixing feature, the block is easy to design and cheap to manufacture, for example by injection molding. Parts are naturally supporting naturally opening mold features, which leads to economical parts even in low quantity use.

In a further option, the cable locations are coded by varying the holding device distances. This could make it difficult if not impossible to place the cables in the wrong location.

As a field of application, it is provided basically anywhere where cables are organized and run inside a machinery or even in cable trays. As another example for an application, places are provided where the cable order and length will affect the function and durability of the machinery, such as locations where the cables are exposed to limited dynamic motion.

It has to be noted that embodiments of the invention are described with reference to different subject matters. In particular, some embodiments are described with reference to method type claims whereas other embodiments are described with reference to the device type claims. However, a person skilled in the art will gather from the above and the following description that, unless otherwise notified, in addition to any combination of features belonging to one type of subject matter also any combination between features relating to different subject matters is considered to be disclosed with this application. However, all features can be combined providing synergetic effects that are more than the simple summation of the features.

While the invention has been illustrated and described in detail in the drawings and foregoing description, such illustration and description are to be considered illustrative or exemplary and not restrictive. The invention is not limited to the disclosed embodiments. Other variations to the disclosed embodiments can be understood and effected by those skilled in the art in practicing a claimed invention, from a study of the drawings, the disclosure, and the dependent claims.

In the claims, the word "comprising" does not exclude other elements or steps, and the indefinite article "a" or "an" does not exclude a plurality. A single processor or other unit may fulfil the functions of several items re-cited in the claims. The mere fact that certain measures are re-cited in mutually different dependent claims does not indicate that a combination of these measures cannot be used to advantage. Any reference signs in the claims should not be construed as limiting the scope.

## Claims

1. A holding device (10) of a fastening system for fastening flexible longitudinal components to a support structure of a medical equipment, the holding device comprising:
- a band segment (12); and
- a connection head (14);
wherein the band segment is connected to the connection head and is configured to be wrapped around the flexible longitudinal component; and
wherein the connection head is configured to be inserted into a matching recess provided by a fixation base to fasten the flexible longitudinal component to the support structure.

2. Holding device according to claim 1, wherein the band segment is length-adjustably connected to the head.

3. Holding device according to claim 1 or 2, wherein the band segment is configured to be wrapped around the flexible longitudinal component in a non-releasable manner; and
wherein the band segment is attached to the connection head with a fixed length.

4. A fixation base (50) of a fastening system for fastening flexible longitudinal components to a support structure of a medical equipment, the fixation base comprising at least one body structure (52) with:
- at least one holding side (54) configured for an attachment of at least one holding device for fastening flexible longitudinal components to the fixation base; and
- at least one connection interface (56) configured to mount the body structure to a support structure;
wherein the holding side comprises at least one recess (58) that is configured for an insertion of a matching connection head of the holding device.

5. Fixation base according to claim 4, wherein the recess is having a rectangular cross section.

6. Fixation base according to claim 4 or 5, wherein the at least one recess is configured for the insertion of the connection head in an inserting direction;
wherein the at least one recess provides a holding force to an inserted connection head against removing the connection head by at least one of the group comprising: friction forces, lateral elastic clamping forces, chemical adhesion and magnetic forces; and
wherein at least one of the side walls of the head or at least one recess is having an inclination such that a width of the recess increases in the insertion direction and the recess provides a snapping-in recess for the respective connection head.

7. Fixation base according to claim 4, 5 or 6, wherein a plurality of recesses is provided;
wherein a first part of the recesses is provided as first type recesses for receiving and holding first type connection heads;
wherein a second part of the recesses is provided as at least second type recesses for receiving and holding second connection heads;
wherein the first type recesses are different than the second type recesses and differ in at least one of the group comprising different forms, different sizes, different proportions and different orientation; and
wherein the different types of recesses provide a predefined fastening order for the flexible longitudinal components equipped with matching connection head types.

8. Fixation base according to one of the claims 4 to 7, wherein the holding side has:
i) at least two or more recesses along a direction for placement of a flexible longitudinal component, the recesses forming a pattern for a matching pattern of a respective number of connection heads of holding devices along flexible longitudinal component; and/or
ii) longitudinal grooves for a predefined placement of the flexible longitudinal components.

9. Fixation base according to one of the claims 4 to 8, wherein two or more body structures are provided; and
wherein the two or more body structures are configured to be arranged in a stapled manner for mounting to the support structure.

10. A fastening system (100) for fastening flexible longitudinal components to a support structure of a medical equipment, the system comprising:
- at least one holding device (10) according to one of claims 1 to 3; and
- at least one fixation base (50) according to one of claims 4 to 9;
wherein the connection heads are insertable into one of the recesses in a such a way that they are capable of holding a flexible longitudinal component.

11. Fastening system according to claim 10, wherein the holding devices are provided as cable straps with a flexible tape section as the band segment and a head with a pawl;
wherein the recesses in the fixation base are adapted to the heads of the cable; and
wherein a cover (104) is provided that is mountable to the body structure to hold fastened cables in a locked manner.

12. A medical equipment (150), comprising:
- a plurality of components (152);
- a support structure (154); and
- a plurality of flexible longitudinal components fastened to the support structure;
wherein at least a part of the flexible longitudinal components is fastened to the support structure by a holding fixture configured as a fastening system (100) according to claim 10 or 11.

13. Medical equipment according to claim 12, wherein the flexible longitudinal components are provided as cables.

14. Medical equipment according to claim 12 or 13, wherein a fixation base of the fastening system is provided in an integrated manner by the support structure.

15. A method (200) for fastening flexible longitudinal components to a support structure of a medical equipment, the method comprising the following steps:
- providing (202) at least one flexible longitudinal component;
- attaching (204) at least one holding device according to one of the claims 1 to 3 to the flexible longitudinal component;
- providing (206) a fixation base according to one of claims 4 to 9;
- inserting (208) at least one of the at least one connection heads into one of the recesses of the fixation base;
- mounting (210) the fixation base to the support structure.
